# EUROPÄISCHE PATENTSCHRIFT

(11) **EP 1 092 575 B1**
(45) Veröffentlichungstag und Bekanntmachung des Hinweises auf die Patenterteilung: **27.09.2006**
(21) Anmeldenummer: 00118043.9
(22) Anmeldetag: 23.08.2000
(51) Int. Cl.: B60J 7/12

(54) **Klapp-bzw. Faltverdeck für Fahrzeuge wie Cabriolets od. dgl.**
Collapsible or foldable top for vehicles like convertibles etc
Capote escamotable ou pliante pour véhicule comme cabriolets etc

(30) Priorität: 15.10.1999 DE 19949878
(43) Veröffentlichungstag der Anmeldung: 18.04.2001
(73) Patentinhaber: PARAT Automotive, Schönenbach GmbH + Co. KG, 42897 Remscheid (DE)
(72) Erfinder: Windpassinger, Martin, 94051 Hauzenberg (DE)
(74) Vertreter: Ostriga, Sonnet, Wirths & Roche

(56) Entgegenhaltungen:
- EP-A- 0 873 896
- DE-A- 3 923 725
- DE-C- 4 218 380
- DE-U- 29 718 206
- DE-U1- 9 209 122
- US-A- 4 964 668
- US-A- 5 297 838

## Beschreibung

Die Erfindung bezieht sich auf ein Klapp- bzw. Faltverdeck für Fahrzeuge wie Cabriolets od. dgl. gemäß dem Oberbegriff der Ansprüche 1 bzw. 2.

Ein derartiges Verdeck ist z.B. aus DE 196 16 891 C1 bekannt und dadurch gekennzeichnet, daß sowohl an der zum Außenbezug weisenden Seite des Innenbezugs als auch an der zum Innenbezug weisenden Seite des Außenbezugs als Anbindungselement jeweils Rastorgane zum Queranstecken an die Spriegel angebracht sind, die als Clipsanordnungen in besonderer Weise ausgestaltet sind. Jedes Rastorgan ist am Innenbezug unmittelbar und am Außenbezug mittelbar über einen mit diesem verklebten oder verschweißten Befestigungsstreifen angenäht, womit vermieden wird, daß die Nähte auf der Außenseite des Verdecks zu sehen sind und Undichtigkeiten ausgeschlossen werden.

Aus DE 92 09 122 U ist ein gattungsgemäßes Verdeck mit einem an den Außenbezug angeschäumten Verdeckpolster bekannt. Dieses Verdeckpolster weist so genannte Rast- und Biegenuten auf, wobei die Rastnuten dem Verdeckgestänge zugeordnet sind. Die Rastnuten weisen ebenfalls an dem Außenbezug angeschweißte Anbindungselemente für das Verdeckgestänge auf.

Auf Basis des vorgenannten Standes der Technik geht die Erfindung von der Erkenntnis aus, daß weitere Vereinfachungen, Verbesserungen und Weiterbildungen wünschenswert sind. Solche zur Verfügung zu stellen ist Aufgabe vorliegender Erfindung.

Die Aufgabe wird durch die Erfindung mit den Merkmalen des Anspruchs 1 und/oder 2 gelöst. Entsprechend ist die Erfindung nach Anspruch 1 dadurch gekennzeichnet, dass die Anbindungselemente (24, 29, 30, 31, 33) von der angeschäumten Gießharzschicht (34) selbst ausgebildet sind, indem sie werkstoffeinheitlich-stoffschlüssig an diese mit angeformt sind, bzw. nach Anspruch 2 dadurch gekennzeichnet, dass die Enden der Anbindungselemente (24, 29, 30, 31, 33) von der angeschäumten Gießharzschicht (34) umschäumt bzw. in diese eingebettet sind.

Der Kern der Erfindung beruht somit im wesentlichen darauf, unter Verzicht auf Nähen, Kleben oder Schweißen die Anbindungselemente einer Gießharzschicht zuzuordnen, die allein durch ihre Anbringung, also das Aufgießen auf ein Verdeckelement wie Außenbezug, Innenbezug und/oder Spanngurt, an diesen fest verankert ist und die Anbindungselemente bereithält, so daß diese an den Gestellteilen, insbesondere Spriegeln befestigt werden können.

Dieses Grundprinzip der Erfindung läßt bedeutsame Erweiterungen in andere Richtungen zu. So kann mit zusätzlichen Vorteilen die Gießharzschicht am Außenbezug zu einer schall- und wärmeisolierenden Dämmschicht ausgedehnt sein, die den zusätzlichen Vorteil aufweist, daß sie den Außenbezug am Aufblähen bei schneller Fahrt hindert.

Ein Überschäumen von Nähten macht es entbehrlich, diese, wie üblich, mit besonderen Maßnahmen abdichten zu müssen.

Durch gezielte Anordnung von Schwächungszonen oder Unterbrechungen der Gießharzschicht können Sollfalt- oder -knickzonen in das Verdeck eingearbeitet werden, die ein reproduzierbar kontrolliertes und sauberes Ablegen des Verdecks jederzeit gewährleisten.

Bezüglich der Spanngurte kann die Gießharzschicht als Polsterung ausgestaltet werden, indem sie der zum Außenbezug weisenden Seite der Spanngurte zugeordnet wird mit dem Effekt, daß sich Gestängeteile, insbesondere der als C-Säule fungierende Eckspriegel, nach außen hin nicht mehr sichtbar abzeichnen.

Weitere vorteilhafte und zweckmäßige Ausgestaltungen sind Gegenstand der Unteransprüche. Sie ergeben sich auch aus der nachfolgenden Beschreibung der Erfindung anhand von in den Zeichnungen dargestellter Ausführungsbeispiele. In den Zeichnungen zeigen:
- Fig. 1: eine schematische, schaubildliche Ansicht eines als Klappverdeck ausgebildeten Fahrzeugverdecks,
- Fig. 2: eine horizontale Innenansicht des Verdecks nach Fig. 1,
- Fig. 3: ein Vertikalschnitt durch das hintere Seitenteil des Verdecks gemäß der Schnittlinie III-III in Fig. 2,
- Fig. 4: einen Teil-Längsschnitt durch Außenbezug und Spriegel zur Darstellung der Spriegelanbindung des Außenbezugs,
- Fig. 5: eine der Fig. 4 entsprechende Darstellung, jedoch zusätzlich mit einem am selben Spriegel angelenkten Innenbezug (Himmel),
- Fig. 6: eine der Fig. 4 entsprechende Darstellung, jedoch mit einer separaten, in die Dämmlage eingearbeiteten Spriegelanbindung,
- Fig. 7: eine entsprechende Darstellung an einem Spanngurt,
- Fig. 8: eine Schnittdarstellung zur Veranschaulichung einer Soll-Knick-bzw. Soll-Faltzone und
- Fig. 9: eine schaubildliche Darstellung dieser Zone im Bereich eines Spanngurtes.

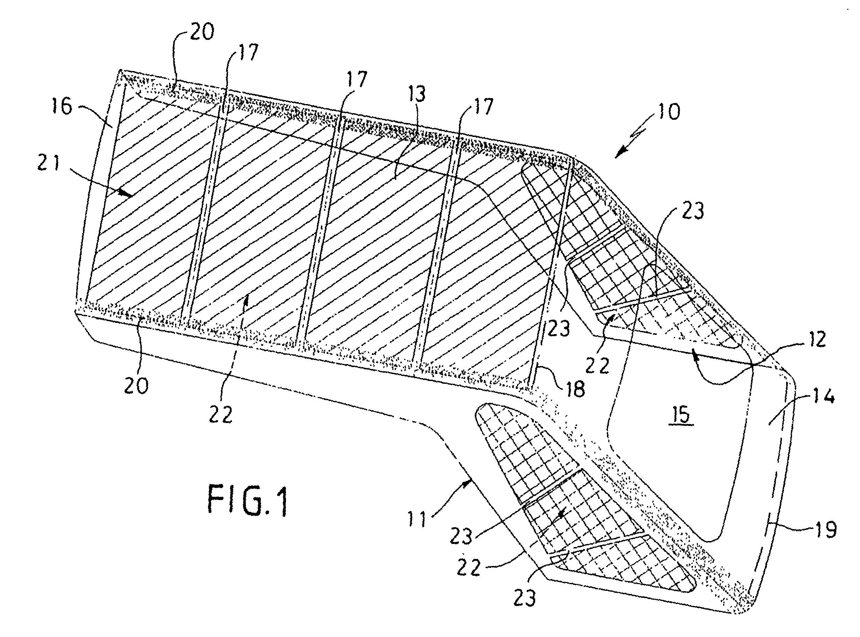

Fig. 1 veranschaulicht am Beispiel eines Klappverdecks für Cabriolets ein geschlossenes Fahrzeugverdeck 10. Es umfaßt die beiden Seitenteile 11 und 12, ein Dachteil 13 und ein Heckteil 14 mit einer darin eingearbeiteten Scheibe 15. Mit 16 ist der dem Frontscheibenrahmen zugeordnete Windlaufspriegel bezeichnet. Die Bezugsziffern 17 weisen auf quer zur Fahrzeuglängsachse gerichtete Spriegel hin. Mit 18 ist der Eckspriegel bezeichnet, der den im wesentlichen oberen horizontalen Verdeckabschnitt in den rückwärtigen Verdeckabschnitt 15 umleitet, und 19 bezeichnet den sogenannten Spannbügel, der beim Schließen des Verdecks zuletzt am Fahrzeugaufbau verriegelt wird. Schließlich verfügt ein Verdeck üblicherweise noch über sich randnah des Verdecks und in Fahrzeuglängsrichtung erstreckende, unter dem Außenbezug und über den Spriegeln 17 und 18 verlaufende Spanngurte 20.

Ein Klappverdeck 10 umfaßt sodann einen auf das Verdeck aufgetragenen, die Abschnitte 11, 12, 13 und 14 bildenden Außenbezug 21. Moderne Verdeckstoffe für den Außenbezug sind dreischichtig ausgebildet mit einem Obergewebe aus Polyacryl, einer Zwischenschicht aus synthetischem Kautschuk auf PUR-Basis oder auf Butylbasis sowie einem inneren oder Untergewebe, welches z.B. aus Polyester oder einem Mischgewebe von Baumwolle und Polyester besteht. Sofern in den Zeichnungen Schnitte durch den Außenbezug dargestellt sind, sind diese drei Stofflagen nicht dargestellt, zumal sie als bekannt vorausgesetzt werden können. Wesentlich ist, daß die aus synthetischem Kunststoff bestehende Schicht gas- und wasserundurchlässig ist, das Verdeck also vollständig dichtet, und besonders zweckmäßig im Rahmen der Erfindung ist es, daß die innere Verdeckstoffschicht von einem Gewebe ausgebildet ist.

In Fig. 1 ist im Dachbereich 13 des Verdecks 10 mit schraffierten Linien und in den Seitenteilen 11 mit kreuzschraffiertem Muster angedeutet, daß auf der Innenseite des Außenbezugs 21 Dämmschichten angebracht sind.

Die mit 22 bezeichnete Dämmschicht erstreckt sich bei dem in Fig. 1 dargestellten Ausführungsbeispiel im wesentlichen vollflächig und durchgehend auf der inneren Fläche des Außenbezugs 10. Dies ist im Prinzip auch bei den Seitenteilen 11 der Fall, doch sind diese Dämmschichten 22 gezielt durch die mit 23 bezeichneten linienhaften Zonen unterteilt, wobei es sich bei diesen Zonen 23 um Dickenverminderungen oder Unterbrechungen der Dämmschicht 22 handeln kann. Die Zonen 23 bilden definierte Knick- bzw. Faltzonen innerhalb der Seitenteile 11 aus, um eine exakt reproduzierbare saubere Ablage des Verdecks beim Öffnen zu gewährleisten. In Fig. 1 nicht dargestellte, sich quer über das Dachteil 13 innerhalb der Dämmung 12 erstreckende Schwächungszonen können ebenfalls an geeigneter Stelle zum selben Zweck angeordnet sein.

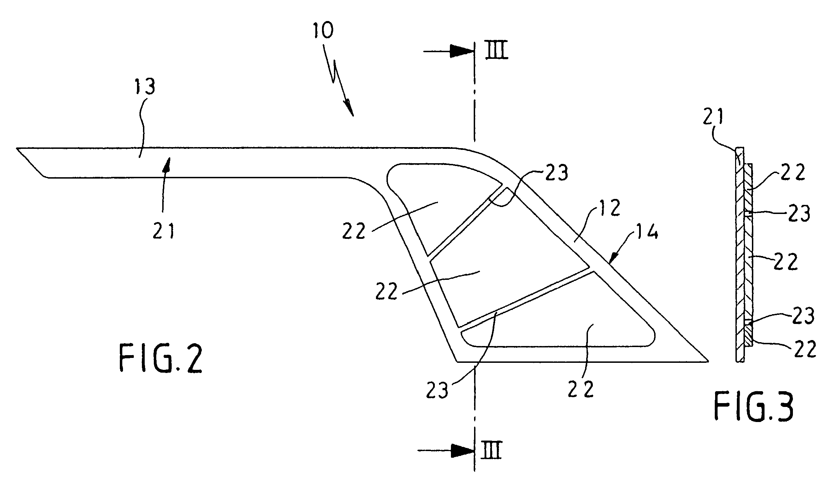

Das Prinzip der "Dämmschicht-Schwächungszonen" und deren Anordnung zeigt nochmal deutlicher die Fig. 2 in der Innenansicht und Fig. 3 im Längsschnitt.

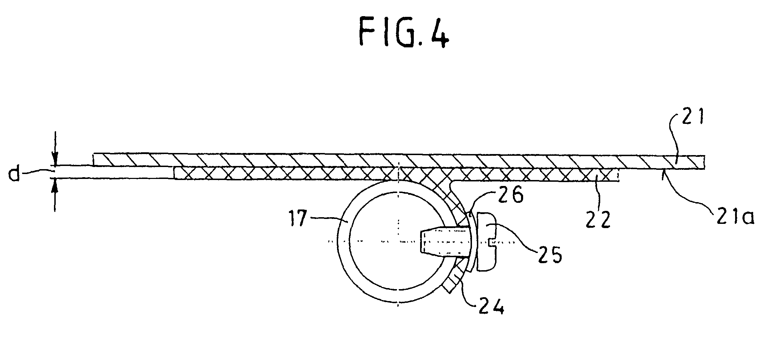

Der Längsschnitt gemäß Fig. 4 zeigt einen Ausschnitt aus dem Außenbezug 21 (der, wie oben beschrieben, aus einem dreilagigen Stoff besteht) und dessen zum Fahrzeuginnenraum weisende Unterfläche 21 a mit der Dämmschicht 22 ausgerüstet ist. Diese Dämmschicht besteht aus einem gießfähigen Kunststoffmaterial, insbesondere aus einem Zweikomponenten-PUR-Kunststoff, der unter hohem Druck von 140 bis 150 bar in einer Gießform, in die die entsprechende(n) Verdeckstoffpartie(n) eingelegt werden, aufgegossen wird. Da die innere Fläche 21a des Außenbezugs 21 üblicherweise und vorzugsweise ein Gewebe ist, läuft das zunächst noch flüssige Kunststoffmaterial in die Poren des Gewebes ein und kann sich dort formschlüssig verkrallen, sobald es aufgeschäumt ist.

Die Schichtdicke d der Dämmschicht 22 beträgt in der praktischen Ausführung in der Regel wenigstens 2 mm bis ca. 8 mm, je nach den speziellen Anforderungen.

Wesentlich ist es, daß das Kunststoffmaterial, aus dem die Dämmschicht 22 gebildet ist, und somit die Dämmschicht 22 selbst ohne besondere Verbindungsmittel an der inneren Oberfläche 21a des Außenbezugs 21 fest haftet.

In Fig. 4 ist außerdem ein Spriegel 17 im Querschnitt dargestellt. Die Spriegel eines Verdecks bilden die den Außenbezug 21 tragende Vorrichtung, und der Außenbezug 21 wird an den Spriegeln 17, 18 angelenkt. Dies geschieht beim Stand der Technik unmittelbar dadurch, daß streifenartige, sogenannte Spriegelanbindungen mit dem Außenbezug 21 fest verbunden, insbesondere vernäht oder verklebt sind und auf der inneren bzw. auf der Unterseite an den Spriegeln angebracht werden.

Beim einem Gegenstand der vorliegenden Erfindung ist die Anordnung so getroffen, daß mit 24 bezeichnete Spriegelanbindungen, die auch hier die Form von Fahnen oder Leisten aufweisen, einstückig-stoffschlüssig mit der Dämmung 22 verbunden sind. Dies geschieht dadurch, daß die Gießform, in der die Dämmschicht 22 mit dem Außenbezug 21 verbunden wird, diese leisten- oder fahnenartigen Abschnitte bereits mit berücksichtigt. Die Spriegelanbindungen 24, die von der Dämmschicht 22 abstehen, sind relativ weich und flexibel (ein günstiger Härtegrad für die Dämmung 22 und somit auch für die Spriegelanbindungen 24 sind ca. 40 Shore D). Folglich lassen sich die Spriegelanbindungen an die äußere Oberfläche der Spriegel 17 anschmiegen. Gesichert werden sie zum Beispiel mit Hilfe von Schrauben 25 und geeigneter Unterlegscheiben 26. Selbstverständlich sind auch andere Befestigungsmittel, die dem Fachmann geläufig sind, möglich.

Für die vorliegende Erfindung sind die Anbindungen 24 und ihre Gießharzschicht-Verbindung mit dem Außenbezug oder anderen Verdeckelementen von besonderer Bedeutung. Will man z.B. auf die beschriebene Dämmung verzichten, lassen sich die Bereiche, in denen die Gießharzschicht 34 anzuordnen ist, auf Streifen oder begrenzte Zonen beschränken, die ausschließlich den Zweck der Halterung von Anbindungselementen 24 erfüllen.

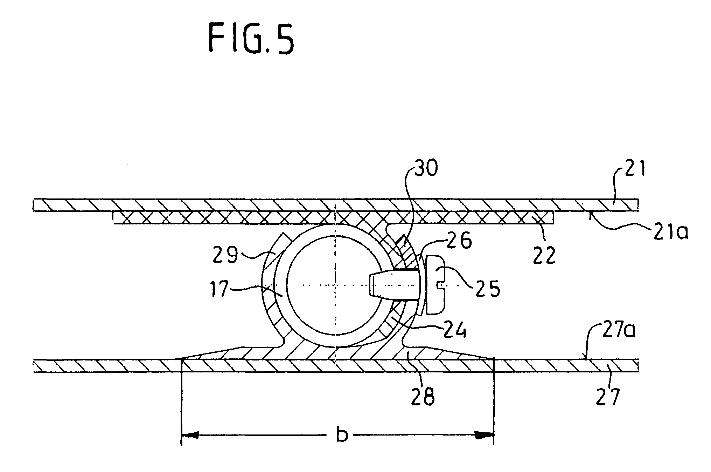

Fig. 5 greift die Wiedergabe nach Fig. 4 auf, ist jedoch um die Darstellung eines Innenbezugs 27 und dessen Anbindung an den Spriegel 17 vervollständigt. Bei diesem Ausführungsbeispiel ist die zum Außenbezug 21 weisende Innenfläche 27 mit quer zur Fahrzeuglängsachse verlaufenden Streifen 28 der Breite b einer Gießharzschicht 34 ausgerüstet, die die gleiche Konsistenz aufweist wie die Gießharzschicht 34 für die Dämmung 22. Mit der Gießharzschicht 34 sind ineinander gegenüberliegende beabstandeter Anordnung zwei Leisten, Lappen oder mehrere in Längsrichtung des Spriegels aufeinander folgende Zungen 29 und 30 ausgebildet, die auf der einen Seite die Oberfläche des Spriegels 27 und auf der gegenüberliegenden Seite die Außenfläche der Spiegelanbindung 24 des Außenbezugs 21 außen umgreifen können. Beim dargestellten Ausführungsbeispiel erfolgt die Befestigung der Elemente am Spriegel 17 mit derselben Schraube 25 und der Unterlegscheibe 26.

Wenn man erreichen will, daß die Spriegelanbindungen 29 und 30, die dem Innenbezug 27 zugeordnet sind, eine höhere Steifigkeit oder Härte aufweisen, beispielsweise zu dem Zweck, sich klammerartig an Spriegel 17 und/oder Außenseite der Spriegelanbindung 24 anschmiegen zu können, stellt man den Werkstoff der Gießharzschicht 34 härter und also weniger gummiartig-weich ein.

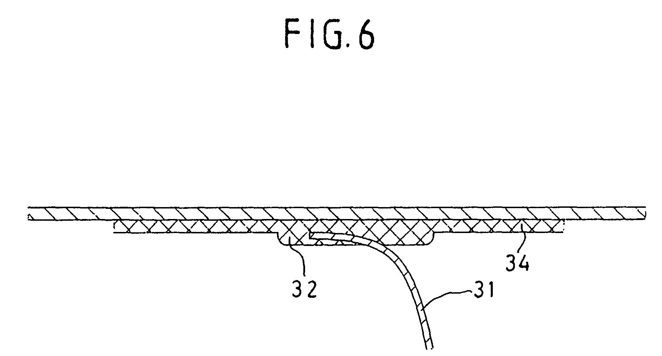

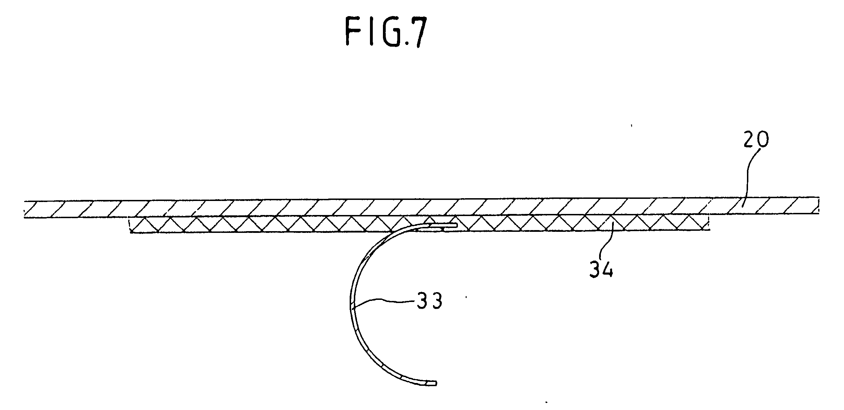

Während bei den Ausführungsbeispielen der Fig. 4 und 5 die Spriegelanbindungen 24 sowie 29 und 30 werkstoffeinheitlich-stoffschlüssig an den jeweiligen Gießharzschichten angebunden sind, veranschaulicht Fig. 6 eine alternative Ausgestaltung, wonach ein besonderes Anbindungselement 31, z.B. ein Gummiband, in eine Gießharzschicht 34 eingebettet ist. Diese Einbettung ist beim Ausführungsbeispiel in einem verdickten Bereich 32 vorgesehen. An entsprechender Stelle der Gießform wird in diese der Streifen 31 eingelegt, damit sein Ende vom Kunststoffmaterial eingeschlossen werden kann. Eine etwas einfachere Ausführungsform zeigt Fig. 7 anhand eines Anbindungselementes 31, welches unmittelbar, d.h. ohne Vorsehen einer Verdickung 32, endseitig in eine Gießharzschicht 34 eingegossen ist. Bei diesem Ausführungsbeispiel könnte es sich um die mittels der Gießharzschicht 34 erzeugte Polsterung eines Spanngurtes 20 handeln.

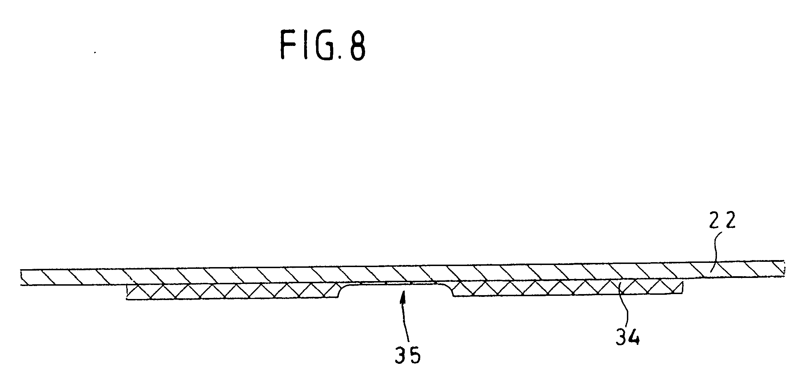

Fig. 8 veranschaulicht an einem Verdeckelement wie z.B. dem Außenbezug 21 angeordnete Gießharzschicht 34 mit einer in der Schichtdicke deutlich reduzierten Zone 35, die dazu bestimmt ist, in dem von ihr bestimmten Bereich das entsprechende Verdeckelement biegereicher bzw. faltwilliger zu gestalten. Somit dient die Schwächungszone 35 zur gezielten Definition von Falt- bzw. Knicklinien.

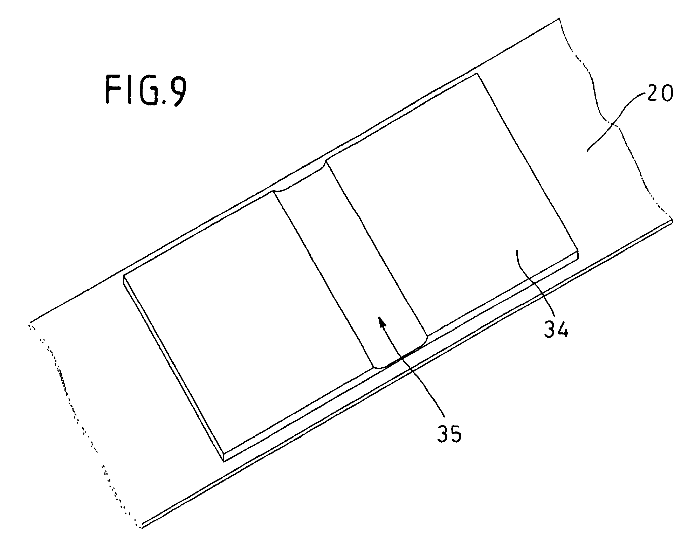

Fig. 9 veranschaulicht die Anordnung nach Fig. 8 in einer schaubildlichen Aufsicht auf einen Spanngurt 20 und läßt ferner erkennen, daß die hier der Polsterung dienende Gießharzschicht 34 großflächig ist, indem sie sich bis auf schmale Randpartien über die gesamte Breite des Spanngurtes 20 hinwegerstreckt.

## Patentansprüche

1. Klapp- bzw. Faltverdeck (10) für Fahrzeuge wie Cabriolets mit einem am Fahrzeug angelenkten Verdeckgestänge mit Verdeckgestellteilen wie Spriegeln (17, 18), an denen je wenigstens ein Verdeckelement, wie Außenbezug (21, 22), Spanngurt (20), Innenbezug (27), befestigt ist, wozu Anbindungselemente vorgesehen sind, die das jeweilige Verdeckelement mindestens mittelbar mit dem Verdeckgestellteil verbinden, wobei auf die zum Verdeckgestellteil (17, 18) weisende Seite bzw. Fläche des Verdeckelements (20, 21, 22, 27) wenigstens im Bereich der Verdeckgestellteil-Überdeckung mindestens eine Gießharzschicht (34) aus einem schäumbaren Kunststoff aufgegossen ist, die nach dem Ausschäumen mit dem Verdeckelement (20, 21, 22, 27) eine feste Verbindung eingeht, **dadurch gekennzeichnet, dass** die verdeckelementseitigen Anbindungselemente (24, 29, 30) von der angeschäumten Gießharzschicht (34) selbst ausgebildet sind, indem sie werkstoffeinheitlich-stoffschlüssig an diese mit angeformt sind.

2. Klapp- bzw. Faltverdeck (10) für Fahrzeuge wie Cabriolets mit einem am Fahrzeug angelenkten Verdeckgestänge mit Verdeckgestellteilen wie Spriegeln (17, 18), an denen je wenigstens ein Verdecketement, wie Außenbezug (21, 22), Spanngurt (20), Innenbezug (27), befestigt ist, wozu Anbindungselemente vorgesehen sind, die das jeweilige Verdeckelement mindestens mittelbar mit dem Verdeckgestellteil verbinden, wobei auf die zum Verdeckgestellteil (17, 18) weisende Seite bzw. Fläche des Verdeckelements (20, 21, 22, 27) wenigstens im Bereich der Verdeckgestellteil-Überdeckung mindestens eine Gießharzschicht (34) aus einem schäumbaren Kunststoff aufgegossen ist, die nach dem Ausschäumen mit dem Verdeckelement (20, 21, 22, 27) eine feste Verbindung eingeht, **dadurch gekennzeichnet, dass** die verdeckelementseitigen Enden der Anbindungselemente (31, 33) von der angeschäumten Gießharzschicht (34) umschäumt bzw. in diese eingebettet sind.

3. Verdeck nach Anspruch 1 oder 2, **dadurch gekennzeichnet, daß** die Anbindungselemente (24, 29, 30, 31, 33) als zungen- bzw. fahnenartige, biegsame Einzel- oder Doppel-Leisten aus der Fläche der Gießharzschicht (34) erhaben vorstehen und zur Befestigung an Verdeckgestellteilen (17, 18) an diese anschmiegbar sind.

4. Verdeck nach einem der vorherigen Ansprüche, **dadurch gekennzeichnet, daß** die Gießharzschicht (34) aus einem unter Hochdruck aufgegossenen Kunststoff auf insbesondere PUR-Basis besteht.

5. Verdeck nach Anspruch 4, **gekennzeichnet durch** eine Härte von etwa 40 Shore D des PUR-Kunststoffs und einem Mischungsverhältnis des Zwei-Komponenten-Kunststoffs von Polyol : Isocyanat von etwa 100:38 Gewichtsanteilen.

6. Verdeck nach einem der Ansprüche 1 bis 5, **gekennzeichnet durch** eine Schichtdicke der Gießharzschicht (34) von etwa 2 bis 8 mm.

7. Verdeck nach einem der vorherigen Ansprüche, wobei das Verdeckelement der Außenbezug (21) ist, **dadurch gekennzeichnet, daß** sich die Gießharzschicht (34) zur Bildung einer wärme- und schallisolierenden Dämmschicht (22) über zumindest weite Flächenbereiche der dem Fahrgastraum zugekehrten Seite des Außenbezugs (21) vollflächig erstreckt.

8. Verdeck nach Anspruch 7, **dadurch gekennzeichnet, daß** mittels der Gießharzschicht (34) Nähte zwischen Partien des Außenbezugs (21) überschäumt und diese damit unter Verzicht auf besondere Nahtabdichtungen gas- und feuchtigkeitsdicht versiegelt sind.

9. Verdeck nach einem der Ansprüche 1 bis 6, wobei die Verdeckelemente Spanngurte (20) sind, **dadurch gekennzeichnet, daß** die Spanngurte (20) zumindest im Querungsbereich der Verdeckgestellteile (17, 18) mit einer dem Außenbezug (21) zugewandten Gießharzschicht (34) als Polsterung (28) überschäumt sind.

10. Verdeck nach Anspruch 9, **dadurch gekennzeichnet, daß** die Spanngurte (20) im wesentlichen über ihre Länge hinweg auf ihren zum Außenbezug (21) weisenden Flächen mit der Gießharzschicht (34) im wesentlichen vollflächig überschäumt sind.

11. Verdeck nach einem der Ansprüche 1 bis 6, wobei das Verdeckelement der Innenbezug (27) ist, **dadurch gekennzeichnet, daß** auf der zum Außenbezug (21) weisenden Fläche des Innenbezugs (27) im Bereich der Spriegel (17, 18) jeweils eine im wesentlichen spriegelparallel verlaufende Gießharzschicht (34) aufgeschäumt ist zur Bildung eines Polsters sowie zur Halterung bzw. Bereitstellung der Spriegelanbindungselemente (29, 30).

12. Verdeck nach einem der vorhergehenden Ansprüche, **dadurch gekennzeichnet, daß** die Gießharzschicht (34) zur Bildung von Sollfalt- bzw. Knickzonen zumindest bereichsweise unterbrochen oder in ihrer Schichtdicke vermindert ist.

## Claims

1. Collapsible or folding top (10) for vehicles such as convertibles with a top linkage which is articulated to the vehicle and has top linkage parts such as bows (17, 18) to which at least one respective top element such as an outer covering (21, 22), a tightening belt (20), an inner covering (27) is fastened, for which purpose tie elements are provided which join the respective top element at least indirectly to the top frame part, wherein at least one casting resin layer (34) of a foamable plastics material is cast onto the side or surface of the top element (20, 21, 22, 27) which points towards the top frame part (17, 18), at least in the region of the top frame part cover, which layer joins firmly with the top element (20, 21, 22, 27) after foaming, **characterised in that** the tie elements (24, 29, 30) on the top element side are formed by the actual foamed-on casting resin layer (34) by being integrally moulded onto this.

2. Collapsible or folding top (10) for vehicles such as convertibles with a top linkage which is articulated to the vehicle and has top linkage parts such as bows (17, 18) to which at least one respective top element such as an outer covering (21, 22), a tightening belt (20), an inner covering (27) is fastened, for which purpose tie elements are provided which join the respective top element at least indirectly to the top frame part, wherein at least one casting resin layer (34) of a foamable plastics material is cast onto the side or surface of the top element (20, 21, 22, 27) which points towards the top frame part (17, 18), at least in the region of the top frame part cover, which layer joins firmly with the top element (20, 21, 22, 27) after foaming, **characterised in that** the foamed-on casting resin layer (34) is foamed around the ends of the tie elements (31, 33) on the top element side or these are embedded in this layer.

3. Top according to Claim 1 or 2, **characterised in that** the tie elements (24, 29, 30, 31, 33) protrude in a raised manner as tongue- or lug-like, flexible single or double shoulders from the surface of the casting resin layer (34) and can adapt to top frame parts (17, 18) for the purpose of fastening to these.

4. Top according to any one of the preceding Claims, **characterised in that** the casting resin layer (34) consists of a plastics material, based in particular on PUR, which is cast on under a high pressure.

5. Top according to Claim 4, **characterised by** a hardness of approximately 40 Shore D of the PUR plastics material and a mixing ratio of the two-component plastics material of polyol:isocyanate of approximately 100:38 parts by weight.

6. Top according to any one of Claims 1 to 5, **characterised by** a layer thickness of the casting resin layer (34) of approximately 2 to 8 mm.

7. Top according to any one of the preceding Claims, wherein the top element is the outer covering (21), **characterised in that**, in order to form a heat- and sound-insulating layer (22), the casting resin layer (34) extends all over at least over wide surface regions of the side of the outer covering (21) which faces the passenger compartment.

8. Top according to Claim 7, **characterised in that** seams between parts of the outer covering (21) are foamed over by means of the casting resin layer (34) and these are therefore sealed so as to be gas-tight and moisture-tight while dispensing with special seam seals.

9. Top according to any one of Claims 1 to 6, wherein the top elements are tightening belts (20), **characterised in that** the tightening belts (20) are foamed over with a casting resin layer (34), which faces the outer covering (21), as padding (28), at least in the region crossed by the top frame parts (17, 18).

10. Top according to Claim 9, **characterised in that** the tightening belts (20) are foamed over substantially all over with the casting resin layer (34) substantially over their length on their surfaces which point towards the outer covering (21).

11. Top according to any one of Claims 1 to 6, wherein the top element is the inner covering (27), **characterised in that** a respective casting resin layer (34), running substantially parallel to the bow, is foamed onto the surface of the inner covering (27) which points towards the outer covering (21) in the region of the bows (17, 18) in order to form padding and to retain or provide the bow tie elements (29, 30).

12. Top according to any one of the preceding Claims, **characterised in that** the casting resin layer (34) is interrupted or reduced in layer thickness at least in regions in order to form predetermined folding or bending zones.

## Revendications

1. Capote escamotable ou pliante (10) pour des véhicules tels que des cabriolets, avec une tringlerie de capote articulée sur le véhicule avec des parties de bâti de capote, telles que des arceaux (17, 18), sur lesquelles est fixé au moins un élément de capote, tel qu'un revêtement extérieur (21, 22), une sangle tendeuse (20), un revêtement intérieur (27), ce pourquoi sont prévus des éléments d'attachement qui relient l'élément de capote respectif au moins indirectement à la partie de bâti de capote, sachant que, sur le côté ou la surface tournée vers la partie de bâti de capote (17, 18) de l'élément de capote (20, 21, 22, 27), est rapportée par moulage, au moins dans la zone du recouvrement partiel de bâti de capote, au moins une couche de résine coulée (34) formée d'une matière synthétique moussable, qui, après le moussage, donne, avec l'élément de capote (20, 21, 22, 27), une liaison rigide, **caractérisée en ce que** les éléments d'attachement (24, 29, 30) situés du côté de l'élément de capote sont réalisés par la couche de résine coulée (34) moussée elle-même, **en ce qu'**ils sont formés d'un seul tenant, par la matière, par une liaison par la matière, unitaire quant aux matériaux, sur celle-ci.

2. Capote escamotable ou pliante (10) pour des véhicules tels que des cabriolets, avec une tringlerie de capote articulée sur le véhicule, avec des parties de bâti de capote, telles que des arceaux (17, 18), sur lesquelles est fixé au moins un élément de capote, tel qu'un revêtement extérieur (21, 22), une sangle tendeuse (20), un revêtement intérieur (27), ce pourquoi sont prévus des éléments d'attachement qui relient l'élément de capote respectif au moins indirectement à la partie de bâti de capote, sachant que, sur le côté ou la surface tournée vers la partie de bâti de capote (17, 18) de l'élément de capote (20, 21, 22, 27), est rapportée par moulage, au moins dans la zone du recouvrement partiel de bâti de capote, au moins une couche de résine coulée (34) formée d'une matière synthétique moussable, qui, après le moussage, donne avec l'élément de capote (20, 21, 22, 27) une liaison rigide, **caractérisée en ce que** les extrémités, situées côté élément de capote, des éléments d'attachement (31, 33) sont enrobés avec moussage, par la couche de résine de moulage (34) moussée, ou incorporés dans celle-ci.

3. Capote selon la revendication 1 ou 2, **caractérisée en ce que** les éléments d'attachement (24, 29, 30, 31, 33), réalisés sous forme de bandes, individuelles ou doubles, flexibles, du genre de languettes ou de fanions, font saillie en relief depuis la surface de la couche de résine de moulage (34) et, pour assurer la fixation à des parties de bâti de capote (17, 18), peuvent être conformés pour épouser leur forme.

4. Capote selon l'une des revendications précédentes, **caractérisée en ce que** la couche de résine de moulage (34) est formée d'une matière synthétique coulée sous haute pression, en particulier à base de PUR.

5. Capote selon la revendication 4, **caractérisée par** une dureté d'environ 40 Shore D pour la matière synthétique à base de PUR et un rapport de mélange de la matière synthétique à deux composants, concernant le polyol : isocyanate, d'environ 100 : 38 parties en poids.

6. Capote selon l'une des revendications 1 à 5 **caractérisée par** une épaisseur de couche d'à peu près 2 à 8 mm pour la couche de résine coulée (34).

7. Capote selon l'une des revendications précédentes, l'élément de capote étant le revêtement extérieur (21), **caractérisé en ce que** la couche de résine coulée (34), pour former une couche isolante (22) isolant de la chaleur et du bruit, s'étend sur toute la surface, sur au moins de larges zones de surface de la face, tournée vers l'habitacle du revêtement extérieur (21).

8. Capote selon la revendication 7, **caractérisée en ce que**, au moyen de la couche de résine coulée (34), des coutures, entre les parties du revêtement extérieur (21), sont revêtues avec une matière moussée, et celles-ci sont ainsi scellées hermétiquement contre les gaz et l'humidité, en renonçant à prévoir des étanchéités particulières pour les coutures.

9. Capote selon l'une des revendications 1 à 6, les éléments de capote étant des sangles tendeuses (20), **caractérisée en ce que** les sangles tendeuses (20), au moins dans la zone de traversée des parties de bâti de capote (17, 18), sont revêtues d'une matière alvéolaire, avec une couche de résine coulée (34), tournée vers le revêtement extérieur (21) et faisant office de rembourrage (28).

10. Capote selon la revendication 9, **caractérisée en ce que** les sangles tendeuses (20), sensiblement sur leur longueur, sur leurs faces tournées vers le revêtement extérieur (21), sont revêtues par une matière moussée, pratiquement sur toute la surface, par la couche de résine coulée (34).

11. Capote selon l'une des revendications 1 à 6, l'élément de capote étant le revêtement intérieur (27), **caractérisé en ce que**, sur la face, tournée vers le revêtement extérieur (21), du revêtement intérieur (27), dans la zone des arceaux (17, 18), est chaque fois rapportée une matière moussée, formant une couche de résine coulée (34) s'étendant sensiblement parallèlement aux arceaux, afin de former un rembourrage, ainsi que pour le maintien, la préparation ou la fourniture des éléments d'attachement d'arceau (29, 30).

12. Capote selon l'une des revendications précédentes, **caractérisé en ce que** la couche de résine coulée (34), pour former des zones devant plier ou des zones d'inflexion, est interrompue, au moins par zones, ou bien subit une diminution de son épaisseur de couche.
